Europäisches Patentamt

European Patent Office

Office européen des brevets

(19)

(11) Publication number: **0 026 064**
**A1**

(12) **EUROPEAN PATENT APPLICATION**

(21) Application number: **80303115.2**

(22) Date of filing: **05.09.80**

(51) Int. Cl.³: **H 04 L 7/02**
**H 04 L 27/06**

(30) Priority: **19.09.79 GB 7932402**

(43) Date of publication of application:
**01.04.81 Bulletin 81/13**

(84) Designated Contracting States:
**AT BE CH DE FR IT LI LU NL SE**

(71) Applicant: **PLESSEY OVERSEAS LIMITED**
**Vicarage Lane**
**Ilford Essex IGI 4AQ(GB)**

(72) Inventor: **Galpin, Robert Keith Portway**
**J.W.Frisolaan 43**
**2252 HD Voorschoten(NL)**

(74) Representative: **Hart, Robert John et al,**
**Plessey Telecommunications Limited Edge Lane**
**Liverpool L7 9NW(GB)**

(54) Improvements in or relating to timing recovery for modems.

(57) The improvements relate to a technique of timing recovery from the line signal by envelope detection using double bandpass filtering prior to detection to improve the power ratio of the recovered timing signal to the interfacing by-products of the squaring process. In addition the difference frequency components which are used to provide the desired timing signal, there are not only the sum-frequency products but also the products of squaring the individual bandpassed signal components, some of which may be in the same frequency region as the difference frequency signal. This problem is avoided by taking the outputs of the two bandpass filters (F4, F5) and applying them severally to the two input ports of a four-quadrant multiplier (P). The output from the multiplier will then comprise only sum-frequency and difference-frequency products, the latter being easily separable (F3) and providing the desired timing recovery signal free from impairments.

Fig. 3a

TITLE: IMPROVEMENTS IN OR RELATING TO TIMING
RECOVERY FOR MODEMS

The invention relates to improvements in or relating to timing recovery for synchronous data modems using double sideband modulation.

In high performance synchronous data modems data symbol timing can be derived from the received signal without the need for special timing pilot tones provided that the data signal is sufficiently random. This proviso is usually satisfied by means of a data scrambler as described in, for example CCITT Recommendations V27, V29 and V35. There are various methods of timing recovery from double sideband data signals. One common method is to use the zero-crossings of the envelope of the line signal obtained by rectification either directly or after translation to a convenient intermediate frequency. Another method is to use zero-crossings of the demodulated baseband signals.

These techniques are suitable only for nominally constant amplitude modulation systems like, for example, four-phase modems conforming to CCITT Recommendation V26, eight-phase modems conforming to CCITT Recommendation V27, and binary quadrature amplitude modulation systems. For data modems using multilevel amplitude and phase modulation like modems conforming to CCITT Recommendation V29 alternative techniques can be used. One technique is to take a narrow band of signal components around half the symbol frequency, commonly known as the "Nyquist" frequency, from the demodulated baseband signals and to square them to produce double frequency components around the symbol frequency.

Where the received line signal has not suffered significant attenuation distortion the baseband signal comprises substantially equal contributions from both upper and lower sidebands of the line signal. In the event of a phase or frequency error in the demodulating carrier the corresponding shifts in frequency or phase of the basebands signals derived from the upper and lower sidebands are substantially mutually cancelling and a correct timing signal is derived. However, if the line signal has suffered significant attenuation distortion of, for example, the upper sideband, the baseband signal derived from the lower sideband signal will predominate. If there is a phase or frequency error in the demodulating carrier the corresponding phase or frequency error in the baseband will not be self-cancelling and the derived timing will be in error.

Returning to the technique of timing recovery from the line signal by envelope detection, it is suggested by Gitlin R.D. and Hayes J. F. BSTJ March 1975 (Vol.54, No.3) Pages 569-593, that double bandpass filtering be employed prior to envelope detection to improve the power ratio of the recovered timing signal to the interfering by-products of the squaring process. When this improved method is used, besides the difference frequency components which provide the desired timing signal, there are the sum-frequency products and the products of squaring the individual bandpassed signal components which may lie in the same frequency region as the difference-frequency and impair the recovered timing signal.

Accordingly an aim of the present invention is to provide a data modem having improved timing recovery which does not suffer from the above mentioned impairment of recovered timing signals.

According to the present invention there is provided a data modem including means for recovering the timing signals from the data on an input line, said means includes first and second filter arrangements which pass a respective signal component of the data at a respective input port and apply signal components to respective input ports of a four-quadrant multiplier, the output of which comprises sum-frequency components and difference-frequency components of the respective data signal components only, the former being removed by a third filter arrangement and the remaining signal being used to drive clock recovery circuits which provide a clock signal to clock demodulation and detection circuits to which the original data is applied on said input line and which provides a data output signal free from timing errors.

The invention will be more readily understood from the following exemplary embodiment which should be read in conjunction with the following drawings wherein:

Figure 1a shows a known arrangement of timing recovery by squaring and adding the sideband "Nyquist" frequency components in both channels of a quadrature amplitude modulation system for data transmission.

Figure 1b shows the frequency location of the various signal components of the arrangement shown in Fig. 1a.

Figure 1c shows the frequency location of the various signal components of figure 1b, together with carrier frequency error and upper sideband attenuation.

Figures 1d and 1e show the effect of upper and lower sideband contributions being unequal in amplitude.

Figure 2a shows a known arrangement of timing recovery by envelope detection of the line signal.

Figure 2b shows a known arrangement of timing recovery by envelope detection of the line signal after frequency translation.

Figure 2c shows a known arrangement of timing recovery by envelope detection of the line signal after double bandpass filtering.

Figure 2d shows the frequency location of the various signal components of Figure 2c,

Figure 3a shows an arrangement of timing recovery according to the present invention; and,

Figure 3b shows the frequency location of the various signal components of Figure 3a.

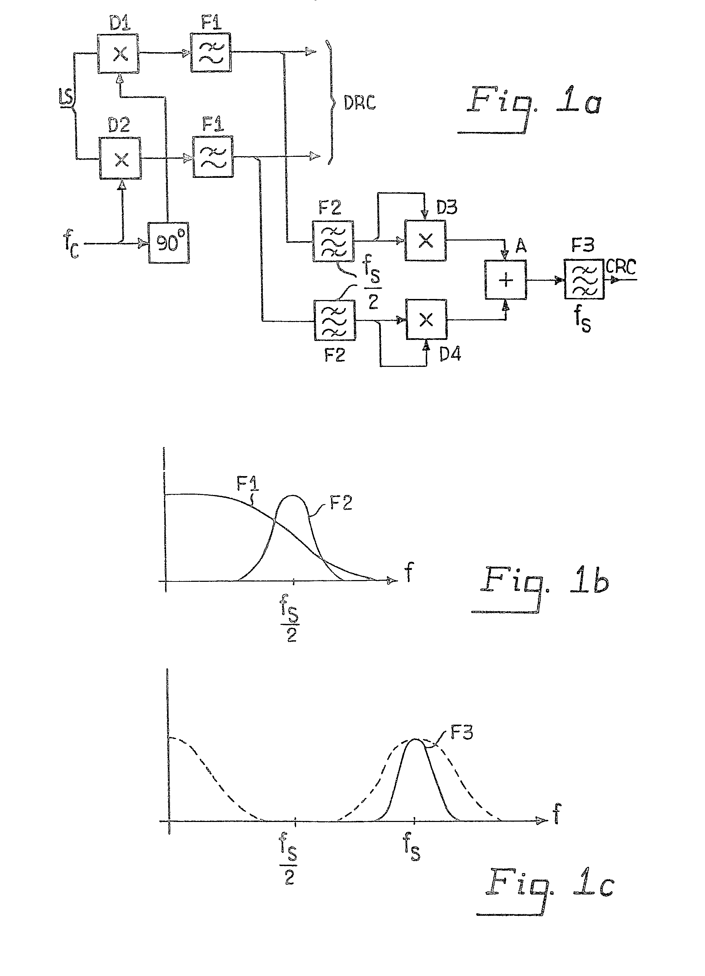

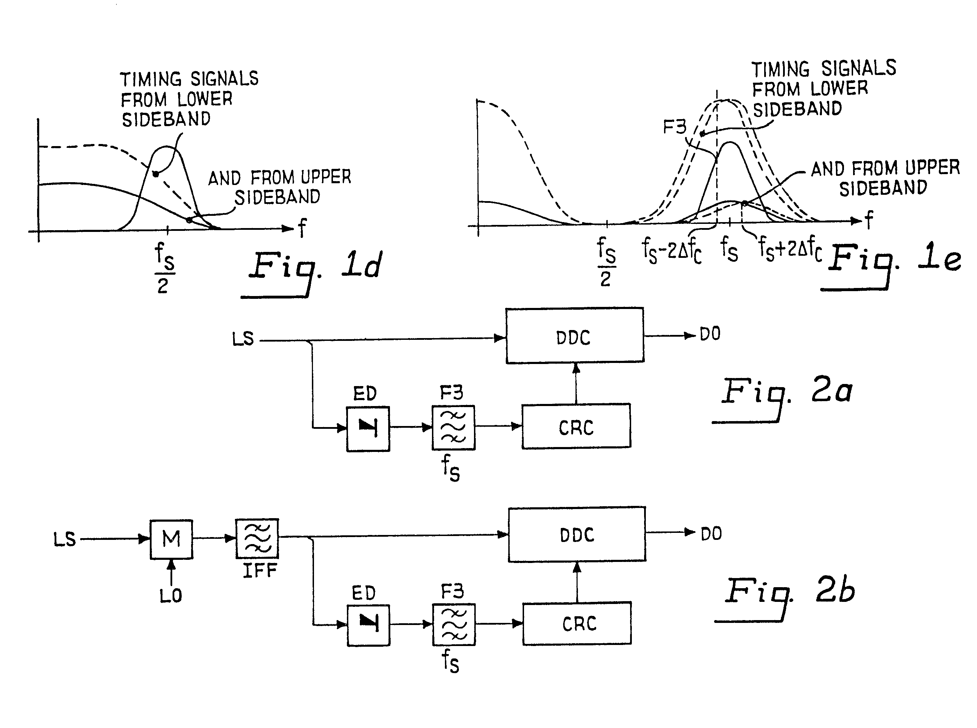

Referring to Figures 1a-1e the timing information around the line frequencies of $(fc \pm \frac{fs}{2})$ are demodulated by the carrier frequency fc to produce baseband timing information at a frequency of $\frac{fs}{2}$ where fs is the data symbol frequency. The line frequencies of line signal LS are demodulated by multiplier/modulator circuits D1 and

D2, filtered by baseband low-pass filters Fl and passed to data recovery circuits by leads DRC. The baseband signals are also filtered by bandpass filters F2 at the "Nyquist" frequency $\frac{fs}{2}$ as shown in Figure lb. The bandpass filtered signals are then squared by circuits D3 and D4 and summed by circuit A to produce a timing signal component at a frequency fs which is extractable by filter F3, as shown in Figure lc, and passed to clock recovery circuits by lead CRC. For those baseband signals at $\frac{fs}{2}$ to be independent of carrier frequency and phase the upper sideband and lower sideband contributions must be equal in amplitude. The affect of their being unequal is illustrated by figure ld. The upper sideband component of the baseband signal is half the amplitude of lower sideband component and the carrier frequency is $\Delta$fc in error, making the lower sideband timing component $(\frac{fs}{2} - \Delta fc)$ and the upper sideband timing component $(\frac{fs}{2} + \Delta fc)$. After squaring, and as shown in Figure le, the lower sideband component of timing information is at $(fs - 2\Delta fc)$ which overwhelms the upper sideband component at $(fs + 2\Delta fc)$, thereby giving erroenous information to the clock recovery circuits.

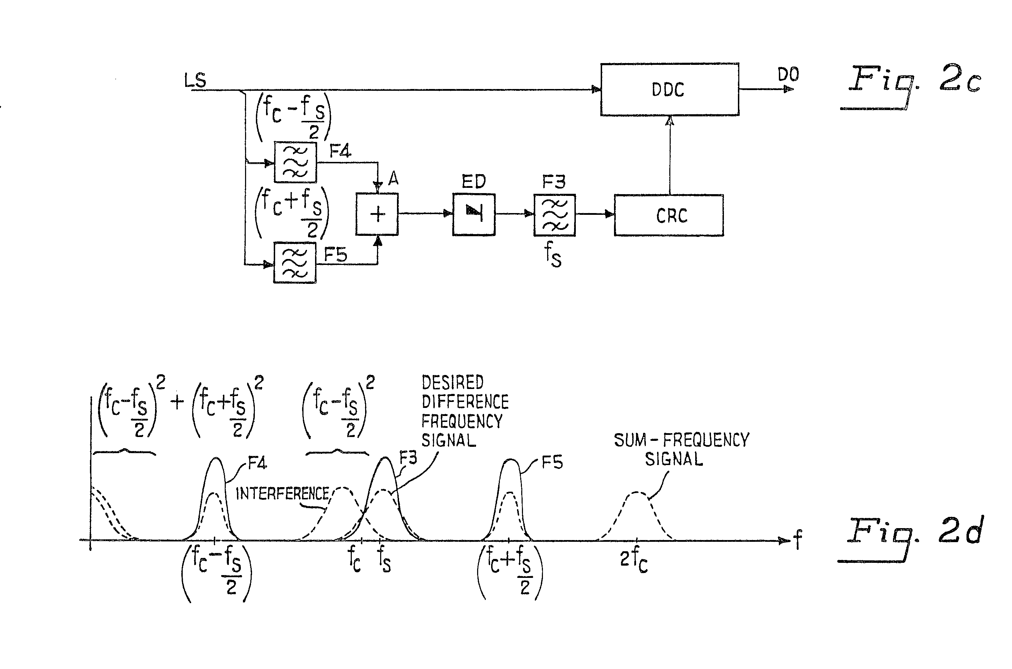

Referring to Figures 2a and 2b known arrangements are shown relevant to nominally constant amplitude modulation systems. Figure 2a shows the line signal LS feeding demodulation and detection circuits DDC and envelope detector ED. The output from detector ED is filtered by filter F3 to extract a timing signal component at a frequency fs which is applied to clock recovery circuits CRC which provide a clock signal for circuits DDC which produce a data output DO. Figure 2b shows a similar arrangement to Figure 2a except that the line signal LS is first modulated by a local oscillator signal LO and then filtered by an IF filter IFF before being applied to the demodulation and detector circuits DDC and envelope detector ED. The arrangements of Figures 2a and 2b lead to the known arrangement of Figure 2c by Gitlin and Hayes. An example of the frequency location of signal components associated with Figure 2c is shown in Figure 2d by dotted lines. The line signal LS is applied to filters F4 and F5 and the output signals summed by circuit A and applied to envelope detector ED which produces signal components around zero frequency from the squaring of the outputs of filters F4 and F5. There will be signal components at $(fc - \frac{fs}{2})$ and $(fc + \frac{fs}{2})$ by direct leakage and components at the sum frequency of 2fc. The desired output is at the difference frequency of fs, but the output can suffer significant interference from the squaring of the output of filter F4.

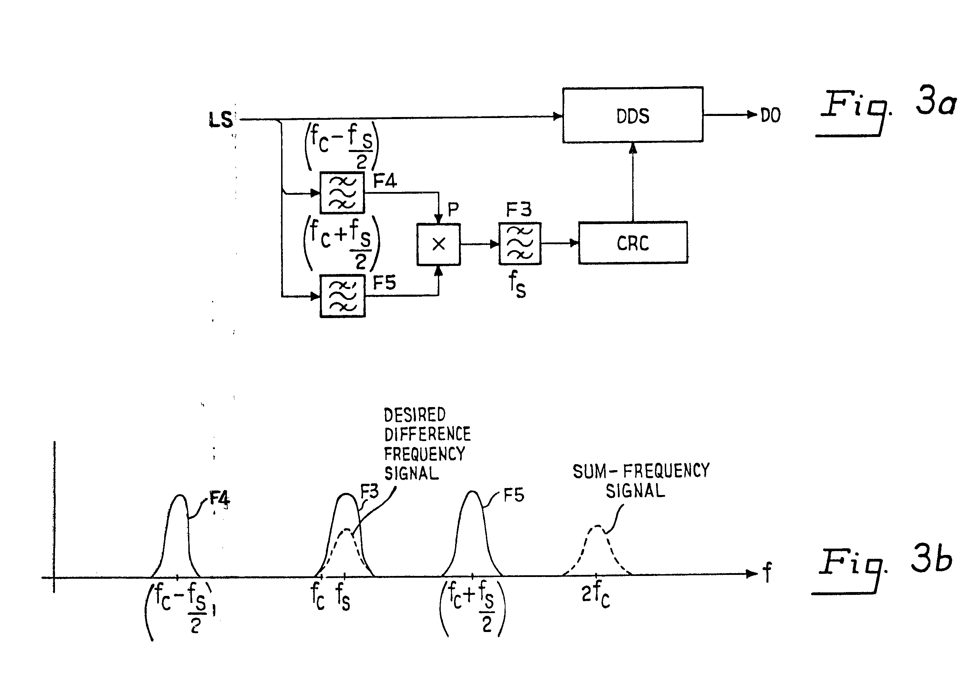

Referring to Figure 3a an arrangement according to the invention is shown. The line signal is applied to demodulation and detection circuits DDS and to filters F4 and F5. The outputs of filters F4 and F5 are multiplied together in a linear four-quadrant multiplier P. The multiplier output spectrum is shown in dotted lines in Figure 3b where it is seen that desired difference frequency signal is free from interference. The unwanted components of the sum-frequency products are removed by filter F3 and the signal is applied to clock recovery circuits CRC which produce a clocking signal for the demodulation and detection circuits DDS which provide the data output DO.

The above description has been of one embodiment and is not intended to limit the scope of the invention. Alternative arrangements will readily be seen by those skilled in the art, for example, the four quadrant multiplier could be replaced by a balanced modulator with the output of filter F3 (figure 3a) being applied to the linear port of a modulator to avoid generation of higher harmonics from filter F4 which may interfere with the desired difference-frequency signal.

WHAT WE CLAIM IS:-

1. A data modem including means for recovering the timing signals from the data on an input line, said means includes first and second filter arrangements which pass a respective signal component of the data at a respective input port and apply signal components to respective input ports of a four-quadrant multiplier, the output of which comprises sum-frequency components and difference-frequency components of the respective data signal components only, the former being removed by a third filter arrangement and the remaining signal being used to drive clock recovery circuits which provide a clock signal to clock demodulation and detection circuits to which the original data is applied on said input line and which provides a data output signal free from timing errors.

2. A data modem according to claim 1 wherein the first filter arrangement passes a signal component $fc - \frac{fs}{2}$ and the second filter arrangement passes a signal component $fc + \frac{fs}{2}$ where fc is the carrier frequency and fs is the data symbol frequency.

3. A data modem according to claim 2 wherein the third filter arrangement removes the sum frequency signal component 2fc and provides an output signal at the difference frequency fs.

4. A data modem according to claim 1, 2 or 3 wherein the filter arrangements are bandpass filters.

0026064

1/4

*Fig. 1a*

*Fig. 1b*

*Fig. 1c*

TIMING SIGNALS
FROM LOWER
SIDEBAND

AND FROM UPPER
SIDEBAND

$\frac{f_S}{2}$

*Fig. 1d*

TIMING SIGNALS
FROM LOWER
SIDEBAND

F3

AND FROM UPPER
SIDEBAND

$\frac{f_S}{2}$   $f_S - 2\Delta f_C$   $f_S$   $f_S + 2\Delta f_C$

*Fig. 1e*

LS — DDC — DO

ED   F3   CRC
$f_S$

*Fig. 2a*

LS — M — IFF — DDC — DO

LO

ED   F3   CRC
$f_S$

*Fig. 2b*

0026064

LS

DDC

DO

$\left(f_C - \dfrac{f_S}{2}\right)$

F4

$\left(f_C + \dfrac{f_S}{2}\right)$

A

ED

F3

CRC

F5

$f_S$

*Fig. 2c*

$\left(f_C - \dfrac{f_S}{2}\right)^2 + \left(f_C + \dfrac{f_S}{2}\right)^2$

$\left(f_C - \dfrac{f_S}{2}\right)^2$

DESIRED
DIFFERENCE
FREQUENCY
SIGNAL

SUM-FREQUENCY
SIGNAL

F4

INTERFERENCE

F3

F5

f

$\left(f_C - \dfrac{f_S}{2}\right)$

$f_C$  $f_S$

$\left(f_C + \dfrac{f_S}{2}\right)$

$2f_C$

*Fig. 2d*

0026064

0026064

LS

DDS → DO

$\left(f_C - \dfrac{f_S}{2}\right)$

F4

P

F3

$\left(f_C + \dfrac{f_S}{2}\right)$

× → CRC

F5

$f_S$

_Fig. 3a_

DESIRED
DIFFERENCE
FREQUENCY
SIGNAL

F4

F3

F5

SUM-FREQUENCY
SIGNAL

$\left(f_C - \dfrac{f_S}{2}\right)$    $f_C$   $f_S$    $\left(f_C + \dfrac{f_S}{2}\right)$    $2f_C$    f

_Fig. 3b_

**European Patent Office**

**EUROPEAN SEARCH REPORT**

Application number

EP 80303115.2

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | US - A - 4 039 748 (CARON) <br> * Fig. 1-3; column 2, lines 9-47; column 4, line 62 - column 5, line 33 * <br> & DE-A1-2 613 432 <br> -- | 1-4 | H 04 L 7/02 <br> H 04 L 27/06 |
| | DE - A - 1 909 730 (C.I.T.) <br> * Fig.3; page 6, lines 12-27; page 7, line 26 - page 8, line 17 * <br> -- | 1,2,4 | |
| | US - A - 3 969 675 (GOSLING) <br> * Fig.12; column 8, lines 25-27; column 8, lines 50-64 * <br> & DE-A-2 331 146 <br> ---- | 1,4 | TECHNICAL FIELDS SEARCHED (Int.Cl. 3) <br><br> H 04 L 7/00 <br> H 04 L 27/00 <br> H 04 B 1/00 <br> H 03 D 1/22 <br> H 03 D 1/24 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search | Date of completion of the search | Examiner | |
| VIENNA | 18-11-1980 | DRÖSCHER | |

EPO Form 1503.1   06.78